# EUROPÄISCHE PATENTSCHRIFT

(11) **EP 2 195 178 B1**
(45) Veröffentlichungstag und Bekanntmachung des Hinweises auf die Patenterteilung: **18.07.2012**
(21) Anmeldenummer: 08749052.0
(22) Anmeldetag: 23.04.2008
(51) Int. Cl.: B60G 15/06, B60G 17/02, H02K 7/06, H02K 11/00, F16F 15/02

(54) **FEDERBEIN FÜR EINE RADAUFHÄNGUNG VON KRAFTFAHRZEUGEN**
SPRING STRUT FOR A WHEEL SUSPENSION OF MOTOR VEHICLES
AMORTISSEUR POUR UNE SUSPENSION DE ROUE DE VÉHICULES AUTOMOBILES

(30) Priorität: 29.08.2007 DE 102007040734
(43) Veröffentlichungstag der Anmeldung: 16.06.2010
(73) Patentinhaber: Audi AG, 85045 Ingolstadt (DE)
(72) Erfinder: MICHEL, Wilfried, 93339 Riedenburg (DE)
(74) Vertreter: Asch, Konrad
(86) Internationale Anmeldenummer: PCT/EP2008/003246
(87) Internationale Veröffentlichungsnummer: WO 2009/030287

(56) Entgegenhaltungen:
- EP-A- 1 681 186
- DE-A1-102005 001 739
- DE-A1-102005 053 493
- FR-A- 2 840 257

## Beschreibung

Die Erfindung betrifft ein Federbein für eine Radaufhängung von Kraftfahrzeugen gemäß dem Oberbegriff des Patentanspruches 1.

Ein gattungsgemäßes aktives Federbein mit einer Höhenverstelleinrichtung zeigt die DE 10 2005 053 493 A1. Daraus ist bekannt, dass die über einen elektromotorischen Aktuator angetriebene Gewindespindel eines Kugelgewindetriebes über zwei Wälzlager auf einer aufbaufesten Führungshülse drehbar und axial unverschiebbar gelagert ist und eine Kugelgewindemutter axial verstellt, die wiederum den verstellbaren Federteller der Tragfeder der Radaufhängung höhenverstellt.

Zwischen dem Fahrzeugaufbau und dem aktiven Federbein ist ein Dämpferlager angeordnet, das hier ein Elastomerlager in Gummi-/Metallausführung ist. Das Dämpferlager eliminiert hochfrequente Schwingungen, die ansonsten von der Fahrbahn über das Fahrwerk in den Aufbau gelangen würden. Außerdem werden Fahrbahnstöße abgemildert, wie beispielsweise bei Überfahrt von Hindernissen und Schlechtwegestrecken, Schlaglöcher etc. Das Dämpferlager ist daher nach speziellen Kennlinien ausgelegt, etwa einer progressiven Federkennlinie, wodurch sich das Dämpferlager bei zunehmenden Federweg verhärtet.

Das Dämpferlager nimmt die kardanische Bewegung auf, die dem Federbein von der Kinematik der Radführungselemente aufgezwungen wird. Die Kraft-/Momenteneinleitung in das Federbein erfolgt dabei über die Anbindungsstelle zwischen einem Traglenker und dem Federbein. Im Betrieb wird somit der gesamte Dämpfer ausgelenkt, wobei das Gegenmoment und die Gegenkraft an der Einspannung der Kolbenstange aufgenommen wird. Da im Betrieb das verzwängte Dämpferlager bereits erheblichen Widerstand gegen eine Verformung entgegen setzt, biegt sich die Kolbenstange unweigerlich. Dadurch kann sich der frei über das Zylinderrohr des Stoßdämpfers ragende Abschnitt der Gewindespindel auf Grund von kinematikbedingten Verzwängungskräften im Stoßdämpfer nachteilig den oszillierenden Dämpfer berühren.

Aus der FR 2 840 257 A ist ein weiteres Federbein für eine Kraftfahrzeug-Radaufhängung bekannt, das eine Höhenverstelleinrichtung aufweist. Die Höhenverstelleinrichtung hat eine Antriebsspindel, die durch ein zusätzliches Lager auf dem Zylinderrohr des Stoßdämpfers und relativ zu diesem drehbar sowie axial dazu verschiebbar gelagert ist.

Aufgabe der Erfindung ist es, das Federbein der gattungsgemäßen Art derart weiterzubilden, dass eine leichtgängige und zuverlässige Höhenverstellung sichergestellt ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die Antriebsspindel der Höhenverstelleinrichtung zusätzlich zu einer oberen, motorgehäuseseitigen Lagerung mittel- oder unmittelbar auf dem Zylinderrohr des Stoßdämpfers und relativ zu diesem drehbar und axial verschiebbar gelagert ist. Um eine Lager-Überbestimmung zu vermeiden, entfällt die im Stand der Technik vorgesehene Führungshülse, mitsamt der unteren Lagerung ersatzlos. Dadurch kann nun mehr der Dämpfer vollständig, bis nahezu an die obere Lagerung in die Gewindespindel eintauchen. Die Folge ist ein enormer Zugewinn an Dämpferlänge und Hub.

Mit der erfindungsgemäßen unteren Lagereinheit der hohlzylindrischen Antriebsspindel auf dem Zylinderrohr des Stoßdämpfers ist der oszillierende Dämpfer gegenüber der rotierenden Antriebsspindel technisch einwandfrei abgestützt. Bei relativ großem Lagerabstand zwischen dieser zusätzlichen, zweiten Lagerstelle und dem Dämpferlager ergibt sich ein selbststabilisierender Effekt hinsichtlich des Spindel-/Dämpfer-Systems. Der große Lagerabstand bleibt dabei über die Hubbewegung des Dämpfers erhalten. Die Kolbenstangendurchbiegung wird auf ein Minimum reduziert, wodurch sich sehr niedrige Spannungen in der Kolbenstange und damit minimale Querkräfte in der Stangenführung ergeben. Dies führt wiederum zu einer Reibungsreduzierung, wodurch die Anspruchsempfindlichkeit der Dämpfung verbessert wird. Außerdem kann in der erfindungsgemäßen Lagereinheit zugleich auch ein Zuganschlag für das Hubelement, d. h. die Gewindemutter, integriert werden.

Baulich besonders günstig ist erfindungsgemäß an der Antriebs- bzw. Gewindespindel ein separates, hülsenförmiges Lagerteil befestigt, das eine Drehlagerung und eine Linearlagerung aufweist. Damit ist sichergestellt, dass sowohl in radialer als auch in axialer Richtung eine leichtgängige und robuste Führung gegeben ist, die ggf. auftretende Querkräfte und -momente zuverlässig abstützen kann.

Das Drehlager und das Linearlager wirken fertigungstechnisch günstig über eine Lagerinnenhülse mit dem Lagerteil einerseits und mittel- oder unmittelbar mit dem Zylinderrohr des Stoßdämpfers andererseits zusammen. Daraus resultiert eine Vormontageeinheit, die einfach und schnell verbaubar ist.

Das Drehlager kann bevorzugt durch zwei separate Wälzlager gebildet sein, von denen das eine ein Nadellager und das andere ein doppeltwirkendes Axiallager ist. Dies ermöglicht eine bei getrennten Lagereinheiten präzise Führung der Gewindespindel sowohl in axialer als auch in radialer Richtung.

Dabei kann baulich und fertigungstechnisch günstig die Lagerinnenhülse einen Radialflansch mit Anlaufflächen für zwei in dem Lagerteil beiderseits des Radialflansches angeordnete Wälzelemente aufweisen.

In vorteilhafter Weiterbildung der Erfindung kann das Linearlager durch mehrere, umfangsverteilte Kugelbahnen in der Lagerinnenhülse und im Zylinderrohr oder in einem auf das Zylinderrohr aufgeschobenen Führungszylinder gebildet sein, zwischen denen entsprechende Kugelreihen angeordnet sind.

Eine einfache Montage des Führungsrohres wird dabei erzielt, indem das auf das Zylinderrohr des Stoßdämpfers aufgeschobene Führungsrohr einerseits über einen angeformten Ringbund an dem Zylinderrohr abgestützt und andererseits durch Verrollen oder Verstemmen mit dem Zylinderrohr fest verbunden ist.

Des weiteren kann in besonders einfacher Weise das Lagerteil mit der Gewindespindel über eine zentrale Gewindeverbindung fest verbunden sein. Dies ermöglicht eine vereinfachte Fertigung der Einzelteile Gewindespindel und Lagerteil mit Lagerinnenhülse bei einem unkomplizierten späteren Zusammenbau.

Alternativ kann das Drehlager durch zumindest ein axial und radial tragendes Kugellager gebildet sein, das demzufolge zwischen dem Lagerteil und der Lagerinnenhülse angeordnet sowohl die axiale als auch radiale Führung der Gewindespindel übernimmt.

In einer weiteren, alternativen Ausgestaltung kann schließlich das Drehlager durch ein Nadellager und mit diesem zusammenwirkende Anlaufscheiben zwischen dem Lagerteil und der Lagerinnenhülse gebildet sein.

Zur weiteren Erläuterung der Erfindung wird im folgenden auf die Figuren der schematischen Zeichnung Bezug genommen. Es zeigen:
- Fig. 1: als Vergleichsbeispiel den oberen Abschnitt eines aus dem Stand der Technik bekannten Federbeines einer Radaufhängung für Kraftfahrzeuge in einem Längsschnitt, mit einer Höhenverstellvorrichtung mit einem elektromotorischen Aktuator und einem Kugelgewindetrieb;
- Fig. 2: den Gesamtschnitt des erfindungsgemäßen Federbeins in einer Ansicht entsprechend der Fig. 1, mit einer Drehlagerung und Linearlagerung zwischen der Gewindespindel des Kugelgewindetriebes und dem Zylinderrohr des Stoßdämpfers;
- Fig. 3: die Drehlagerung und Linearlagerung gemäß Fig. 2 in vergrößerter Darstellung;
- Fig. 4: eine Teilansicht einer zur Fig. 3 alternativen Drehlagerung und Linearlagerung mit einem axial und radial führenden Kugellager; und
- Fig. 5: eine weitere Teilansicht einer zur Fig. 3 alternativen Drehlagerung und Linearlagerung mit einem Nadellager und mit diesem zusammenwirkenden Anlaufscheiben.

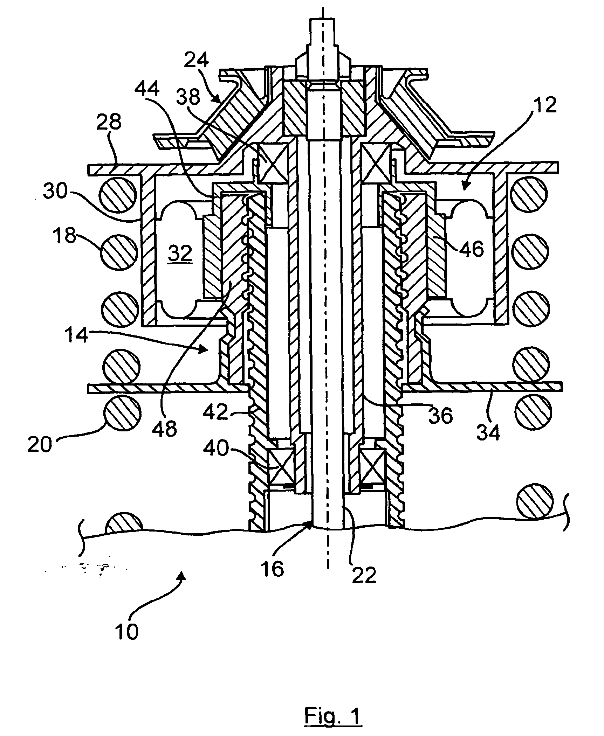

Die Fig. 1 zeigt als Vergleichsbeispiel in einem oberen Abschnitt ein aus dem Stand der Technik bekanntes Federbein 10 einer nicht weiter dargestellten Radaufhängung für Kraftfahrzeuge, mit einer Höhenverstellvorrichtung, die sich im Wesentlichen aus einem elektromotorischen Aktuator 12 und einem Kugelgewindetrieb 14 zusammensetzt.

Das Federbein 10 weist in bekannter Weise einen Teleskop-Stoßdämpfer 16 und eine diesen umgebende, nur teilweise dargestellte Schraubendruckfeder als Tragfeder 20 auf. Ferner ist eine Ausgleichsfeder 18 vorgesehen.

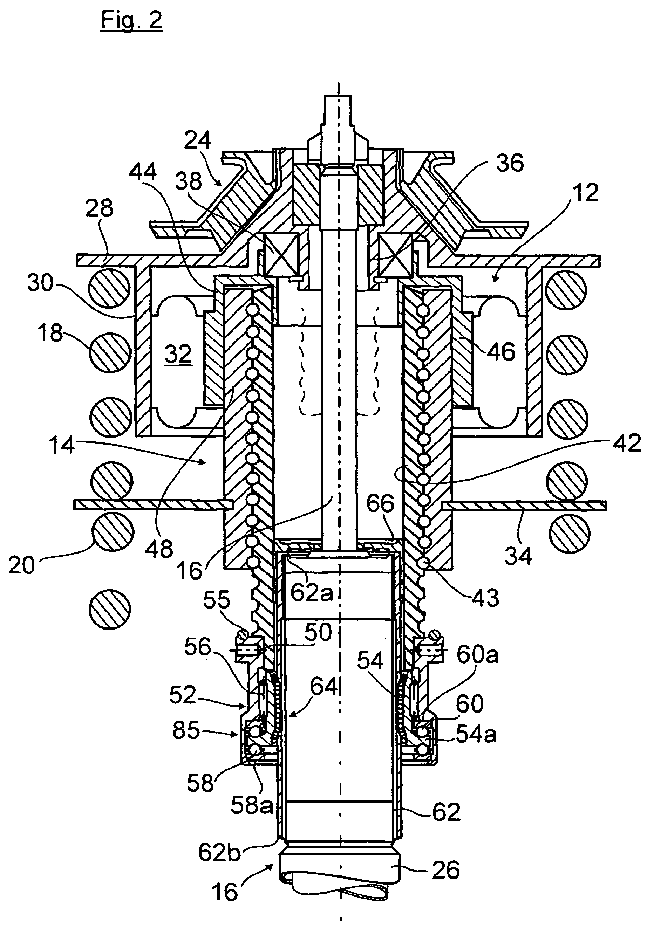

Der Stoßdämpfer 16 ist mit seiner Kolbenstange 22 über ein gummielastisches Dämpferlager 24 (**Fig. 1**) an dem nicht ersichtlichen Aufbau des Kraftfahrzeuges angelenkt, während dessen Zylinderrohr 26 (**Fig. 2**) an einem nicht dargestellten Lenker oder einem Radträger der Radaufhängung angelenkt oder befestigt ist.

Die Ausgleichsfeder 18 ist aufbauseitig über einen Federteller 28 fest abgestützt. Der Federteller 28 ist dabei Teil eines topfförmigen Gehäuses 30, das auch den ringförmigen Stator 32 des Aktuators 12 aufnimmt.

Ferner ist die Ausgleichsfeder 18 an einem axial verstellbaren Federteller 34 abgestützt, auf den wie ersichtlich auch die Tragfeder 20 wirkt. Die Tragfeder 20 ist zudem in nicht dargestellter, bekannter Weise über einen Federteller am Zyinderrohr 26 des Stoßdämpfers 16 fest abgestützt.

An dem Gehäuse 30 ist des weiteren eine axial nach unten abragende Führungshülse 36 um die Kolbenstange 22 herum angeordnet, auf der über ein oberes und ein unteres Wälzlager 38, 40 die hohlzylindrische Gewindespindel 42 des Kugelgewindetriebes 14 drehbar gelagert ist. Die Gewindespindel 42 ist über ein Flanschteil 44 mit dem Rotor 46 des Aktuators 12 trieblich verbunden.

Die Gewindespindel 42 wirkt über Kugeln 43 (**Fig. 2**) mit der um die Gewindespindel 42 angeordneten Kugelgewindemutter 48 zusammen, die wie ersichtlich den verstellbaren Federteller 34 trägt.

Durch elektromotorisches Verdrehen der Gewindespindel 42 wird somit die Kugelgewindemutter 48 axial verschoben, wodurch über die Tragfeder 20 die Karosserie des Kraftfahrzeuges angehoben oder abgesenkt werden kann. Die Ausgleichsfeder 18 dient in bekannter Weise zu einer Verringerung der Stellkräfte, die über den Akuator 12 aufzubringen sind.

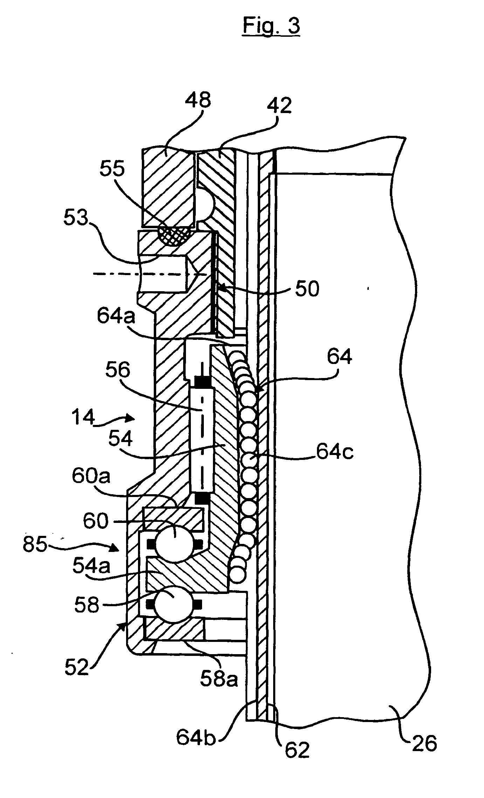

Wie oben erwähnt erfolgt im Vergleichsbeispiel der **Fig. 1** die Drehlagerung der Gewindespindel 42 auf der Führungshülse 36 über die oberen und unteren Wälzlager 38, 40. Demgegenüber ist im erfindungsgemäßen Federbein gemäß den **Fig. 2** **und** **3** das untere Wälzlager 40 durch eine noch zu beschreibende Dreh- und Linearlagerung zwischen der das Zylinderrohr 26 des Stoßdämpfers 16 überragenden Gewindespindel 42 und dem Zylinderrohr 26 ersetzt. Die mit den Federbein-Bauteilen der **Fig. 1** in Aufbau und Funktionsweise identischen Federbein-Bauteile der **Fig. 2** und **3** sind mit gleichen Bezugszeichen versehen.

Um eine Lager-Überbestimmung zu vermeiden, entfällt gemäß der **Fig. 2** das untere Wälzlager 40 ersatzlos. Entsprechend entfällt auch die in der **Fig. 1** nach unten abragende Führungshülse 36. Diese ist in der **Fig. 2** durch einen aufbaufesten Hülsenansatz 36 ersetzt, der das obere Wälzlager 38 trägt. Dadurch kann nunmehr der Dämpfer bis nahe an das obere Wälzlager 38 in die Gewindespindel 42 eintauchen.

Dazu ist über eine zentrale Gewindeverbindung bei 50 ein rohrförmiges, nach unten abragendes Lagerteil 52 mit einem Innengewinde auf ein korrespondierendes Außengewinde der Gewindespindel 42 fest aufgeschraubt. Eine oder mehrere Querbohrungen 53 im Lagerteil 52 dienen zum Ansetzen eines Schraubwerkzeuges (nicht dargestellt). Ferner ist an der oberen Stirnfläche des Lagerteiles 52 ein Dämpfungsring 55 eingefügt, der als federnder Anschlag für die Kugelgewindemutter 48 dient.

Das Lagerteil 52 weist eine Lagerinnenhülse 54 auf, die über ein Nadellager 56 als Radiallager drehbar im Lagerteil 52 gelagert ist. Ferner ist an die Lagerinnenhülse 54 ein Radialflansch 54a angeformt, in den ringförmige Wälzbahnen (ohne Bezugszeichen) für beiderseits des Radialflansches 54a angeordnete Wälzelemente 58, 60 eingearbeitet sind. Die Wälzelemente 58, 60 dienen als doppelt wirkendes Axiallager 85. Die Anlaufringe 58a, 60a des Axiallagers 85 sind in dem Lagerteil 52 wie ersichtlich befestigt.

Ferner bildet die Lagerinnenhülse 54 mit einer Führungshülse 62 auf dem Zylinderrohr 26 des Stoßdämpfers 16 ein Linearlager 64. Dazu sind in die Lagerinnenhülse 54 mehrere umfangsversetzte, axial verlaufende Kugelbahnen 64a (vgl. **Fig. 3**) eingearbeitet, die mit ebenfalls axial ausgerichteten Kugelbahnen 64b in der Führungshülse 62 unter Zwischenschaltung von Kugelreihen 64c zusammenwirken. Die Lagerinnenhülse 54 ist somit in Umfangsrichtung unverdrehbar auf der Führungshülse 62 geführt. Mit dieser Drehsicherung ist verhindert, dass sich auf Grund von Trägheitskräften und Restreibung die Kugelbüchse auf dem Dämpferrohr radial dreht.

Wie aus der **Fig. 2** hervorgeht sind die Linearführung über das Linearlager 64, das Radiallager 56 und das doppelt wirkende Axiallager 85 in einer gemeinsamen Baueinheit zusammengefasst. Die Lager in der Baueinheit können mit einer Lebensdauerschmierung versehen sein. Die in den Figuren nicht gezeigte Abdeckung erfolgt - genauso wie beim Kugelgewindetrieb - über einen außen liegenden Faltenbalg.

Um beim erfindungsgemäßen Federbein beim Oszillieren des Dämpfers eine entsprechende Luftverdrängung bzw. Luftansaugung zu ermöglichen, sind an der oberen Dämpferbefestigung entsprechend dimensionierte Bohrungen vorgesehen. Diese Bohrungen bewirken außerdem eine optimale Kühlung des Dämpfers.

Wie insbesondere aus der **Fig. 2** hervorgeht, ist die Relativbewegung zwischen der Gewindespindel 42 und dem Dämpfer in eine lineare und in eine rotatorische Komponente zerlegt, wobei die Lagerinnenhülse 54 als ein "Zwischenelement" die Trennung zwischen den beiden Bewegungsrichtungen bewerkstelligt.

Die Führungshülse 62 (vgl. **Fig. 2**) ist an ihrem oberen Ende mittels eines angeformten, radial nach innen verlaufenden Ringbundes 62a am Zylinderrohr 26 abgestützt und an ihrem unteren Ende bei 62b durch Einrollen in eine Nut 26a des Zylinderrohres 26 festgesetzt. Ferner ist sie durch zumindest eine Axialnut in Umfangsrichtung formschlüssig gehalten, wobei korrespondierende Vorsprünge oder Stege (nicht dargestellt) an dem Zylinderrohr 26 vorgesehen sind. Auf das Führungsrohr 62 ist zudem eine Anschlagtasse 66 für einen nicht dargestellten, gummielastischen Anschlagpuffer aufgesetzt.

Über das fest mit der Gewindespindel 42 verbundene Lagerteil 52 mit der Lagerinnenhülse 54 ist in separaten Lagern 56, 58, 60, 64 eine Drehlagerung, Axiallagerung bzw. Abstützung und eine Linearlagerung zwischen der Gewindespindel 42 und der Führungshülse 62 bzw. dem Zylinderrohr 26 des Stoßdämpfers 16 geschaffen, die eine leichtgängige, klemmfreie Betätigung der Höhenverstellung 12, 14 bzw. deren Komponenten sicherstellt.

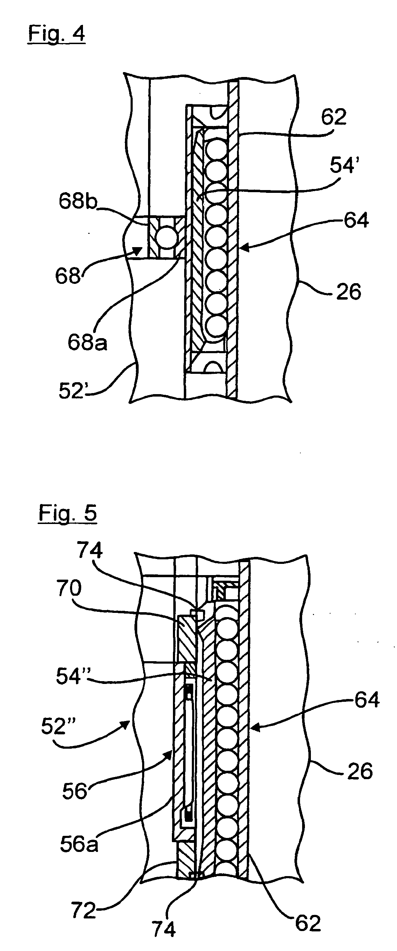

Die **Fig. 4** zeigt eine nur abschnittsweise dargestellte, alternative Drehlagerung zwischen der Gewindespindel 42 bzw. dem daran befestigten Lagerteil 52' und der Führungshülse 62 auf dem Zylinderrohr 26 des Stoßdämpfers 16.

Anstelle des Nadellagers 56 und der Axiallager 58, 60 ist dabei ein sowohl axial als auch radial tragendes Kugellager 68 eingesetzt, dessen Lagerinnenring 68a an der Lagerinnenhülse 54' und dessen Lageraußenring 68b an dem Lagerteil 52' festgelegt ist. Das Linearlager 64 ist im wesentlichen wie vorstehend ausgeführt.

Die **Fig. 5** schließlich zeigt eine weitere, alternative Ausgestaltung der Drehlagerung zwischen der Gewindespindel 42 bzw. dem daran befestigten Lagerteil 52" und der Führungshülse 62 auf dem Zylinderrohr 26 des Stoßdämpfers 16.

Hier wirkt anstelle der Axiallagerungen 58, 60 gemäß der Fig. 2 und 3 das Nadellager 56 zur Axialsicherung mit Anlaufscheiben 70, 72 zusammen. Die Anlaufscheiben 70, 72 sind - an den Lageraußenring 56a des Nadellagers 56 anschließend - in das Lagerteil 52" eingesetzt, während die Lagerinnenhülse 54" über Sicherungsringe 74 axial gehalten ist. Das Linearlager 64 ist wiederum im Wesentlichen wir vorstehend beschrieben ausgeführt.

Die beschriebenen Dreh- und Linearlagerungen können dauergeschmiert ausgeführt sein. Ferner kann insbesondere zwischen dem verschiebbaren Federteller 34 und dem Zylinderrohr 26 des Stoßdämpfers 16 eine gummielastische Schutzmanschette (nicht dargestellt) angeordnet sein, die die besagten Lagerungen und Führungen abdeckt.

Die Erfindung ist nicht auf die beschriebenen Ausführungsbeispiele beschränkt. So kann z.B. aufgrund der zusätzlichen Dreh- und Linearlagerungen gemäß den **Fig. 2 bis 5** ggf. das Wälzlager 40 (**Fig. 1**) entfallen.

## Patentansprüche

1. Federbein für eine Radaufhängung von Kraftfahrzeugen, mit einem Teleskop-Stoßdämpfer (16) und einer diesen umgebenden Tragfeder (20), sowie mit einer Höhenverstelleinrichtung (14) mit einer angetriebenen drehbar an einem aufbaufesten Lager (38) gelagerten Antriebsspindel (42), die mit einem unverdrehbar angeordneten, höhenverstellbaren Hubelement (48) zusammenwirkt, das einen Federteller (34) der Tragfeder (20) trägt, **dadurch gekennzeichnet, dass** die Antriebsspindel (42) zusätzlich zum Lager (38), ein separates, hülsenförmiges Lagerteil (52) aufweist, das an der Antriebsspindel bzw. der Gewindespindel (42) befestigt ist und das mittel- oder unmittelbar auf dem Zylinderrohr (26) des Stoßdämpfers (16) und relativ zu diesem über ein Drehlager (56, 58, 60; 68) drehbar und axial über ein Linearlager (64) verschiebbar gelagert ist, wobei das Drehlager (56, 58, 60; 68) und das Linearlager (64) über eine Lagerinnenhülse (54) mit dem Lagerteil (52) oder der Antriebsspindel (42) einerseits und mittel- oder unmittelbar mit dem Zylinderrohr (26) des Stoßdämpfers (16) andererseits zusammenwirken.

2. Federbein nach Anspruch 1, **dadurch gekennzeichnet, dass** die Höhenverstelleinrichtung ein Kugelgewindetrieb mit einer Gewindespindel (42) als Antriebsspindel ist, die über Wälzelemente (43) mit einer Kugelgewindemutter als Hubelement (48) zusammenwirkt, wobei die Kugelgewindemutter (48) den Federteller (34) der Tragfeder (20) trägt und/oder der Ausgleichsfeder (18) trägt.

3. Federbein nach einem der vorhergehenden Ansprüche, **dadurch gekennzeichnet, dass** das Drehlager durch zwei separate Wälzlager gebildet ist, von denen das eine ein Nadellager (56) und das andere ein doppeltwirkendes Axiallager (58, 60) ist.

4. Federbein nach einem der vorhergehenden Ansprüche, **dadurch gekennzeichnet, dass** die Lagerinnenhülse (54) einen Radialflansch (54a) mit Anlaufflächen für zwei in dem Lagerteil (52) beiderseits des Radialflansches (54a) angeordnete Wälzelemente (58, 60) aufweist.

5. Federbein nach einem der vorhergehenden Ansprüche, **dadurch gekennzeichnet, dass** das Linearlager (64) durch mehrere, umfangsverteilte Kugelbahnen in der Lagerinnenhülse (54) und im Zylinderrohr oder in einem auf das Zylinderrohr aufgeschobenen Führungszylinder (62) gebildet ist, zwischen denen entsprechende Kugelreihen (64c) angeordnet sind.

6. Federbein nach Anspruch 5, **dadurch gekennzeichnet, dass** der auf das Zylinderrohr (26) des Stoßdämpfers (16) aufgeschobene Führungszylinder (62) einerseits über einen angeformten Ringbund (62a) an dem Zylinderrohr (26) abgestützt und andererseits durch Verrollen oder Verstemmen mit dem Zylinderrohr (26) fest verbunden ist.

7. Federbein nach einem der vorhergehenden Ansprüche, **dadurch gekennzeichnet, dass** das Lagerteil (52) mit der Antriebsspindel (42) über eine zentrale Gewindeverbindung (50) fest verbunden ist.

8. Federbein nach einem der vorhergehenden Ansprüche, **dadurch gekennzeichnet, dass** das Drehlager durch zumindest ein axial und radial tragendes Kugellager (68) gebildet ist.

9. Federbein nach einem oder mehreren der vorhergehenden Ansprüche, **dadurch gekennzeichnet, dass** das Drehlager durch ein Nadellager (56) und mit diesem zusammenwirkende Anlaufscheiben (70, 72) zwischen dem Lagerteil (52") und der Lagerinnenhülse (54") gebildet ist.

## Claims

1. Strut for a wheel suspension system of motor vehicles, comprising a telescopic shock absorber (16) and a support spring (20) surrounding said shock absorber, and comprising a vertical adjustment device (14) having a driven drive spindle (42) which is rotatably mounted on a bearing (38) which is fixed to the bodywork and cooperates with a vertically adjustable lifting element (48) which is non-rotatably arranged and supports a spring plate (34) of the support spring (20), **characterised in that**, in addition to the bearing (38), the drive spindle (42) has a separate, sleeve-shaped bearing part (52) which is fixed to the drive spindle or threaded spindle (42) and is indirectly or directly mounted on the cylinder tube (26) of the shock absorber (16) such that, in relation thereto, it is rotatably mounted via a pivot bearing (56, 58, 60; 68) and mounted so as to be axially displaceable via a linear bearing (64), the pivot bearing (56, 58, 60; 68) and the linear bearing (64), on one hand, cooperating via a bearing inner sleeve (54) comprising the bearing part (52) or the drive spindle (42) and, on the other hand, cooperating indirectly or directly with the cylinder tube (26) of the shock absorber (16).

2. Strut according to claim 1, **characterised in that** the vertical adjustment device is a ball screw having a threaded spindle (42) as the drive spindle, which cooperates via rolling elements (43) with a ball screw nut as the lifting element (48), the ball screw nut (48) supporting the spring plate (34) of the support spring (20) and/or supporting the compensating spring (18).

3. Strut according to any of the preceding claims, **characterised in that** the pivot bearing is formed by two separate rolling bearings, one being a needle bearing (56) and the other being a double-acting axial bearing (58, 60).

4. Strut according to any of the preceding claims, **characterised in that** the bearing inner sleeve (54) comprises a radial flange (54a) having stop faces for two rolling elements (58, 60) which are arranged in the bearing part (52) and on either side of the radial flange (54a).

5. Strut according to any of the preceding claims, **characterised in that** the linear bearing (64) is formed by a plurality of ball tracks which are peripherally distributed in the bearing inner sleeve (54) and in the cylinder tube or in a guide cylinder (62) which is slid onto the cylinder tube, corresponding rows of balls (64c) being arranged between said ball tracks.

6. Strut according to claim 5, **characterised in that** the guide cylinder (62) which is slid onto the cylinder tube (26) of the shock absorber (16) is, on one hand, supported on the cylinder tube (26) via an integrally formed ring collar (62a) and is, on the other hand, rigidly connected to the cylinder tube (26) by rolling or caulking.

7. Strut according to any of the preceding claims, **characterised in that** the bearing part (52) is rigidly connected to the drive spindle (42) via a central threaded connection (50).

8. Strut according to any of the preceding claims, **characterised in that** the pivot bearing is formed by at least one axially and radially supporting ball bearing (68).

9. Strut according to one or more of the preceding claims, **characterised in that** the pivot bearing is formed between the bearing part (52") and the bearing inner sleeve (54") by a needle bearing (56) and stop washers (70, 72) which cooperate therewith.

## Revendications

1. Jambe de force à ressort pour suspension de véhicules automobiles, comprenant un amortisseur de chocs télescopique (16) et un ressort porteur (20) entourant celui-ci, ainsi qu'un dispositif de déplacement en hauteur (14) avec une bielle de commande (42) commandée montée à rotation sur un palier (38) fixé sur la carrosserie, laquelle bielle coopère avec un élément de levage (48) réglable en hauteur agencé non rotatif, qui porte une coupelle de ressort (34) du ressort porteur (20), **caractérisée en ce que** la bielle de commande (42) présente en plus du palier (38) un partie de palier séparée (52) en forme de douille, qui est fixée sur la bielle de commande ou sur la broche filetée (42) et qui est montée indirectement ou directement sur le tube cylindrique (26) de l'amortisseur de chocs (16), à rotation par rapport à celui-ci via un coussinet de pivotement (56, 58, 60 ; 68) et à coulissement via un coussinet linéaire (64), dans laquelle le coussinet de pivotement (56, 58, 60 ; 68) et le coussinet linéaire (64) coopèrent via une douille intérieure de coussinet (54) avec la partie de palier (52) ou la broche de commande (42), d'une part, et indirectement ou directement avec le tube cylindrique (26) de l'amortisseur de chocs (16), d'autre part.

2. Jambe de force à ressort selon la revendication 1, **caractérisée en ce que** le dispositif de déplacement en hauteur est une vis d'entraînement à billes avec une broche filetée (42) comme bielle de commande, qui coopère via des éléments à rouleaux (43) avec un écrou taraudé à billes comme élément de levage (48), dans laquelle l'écrou taraudé à billes (48) porte la coupelle de ressort (34) du ressort porteur (20) et/ou du ressort compensateur (18).

3. Jambe de force à ressort selon l'une quelconque des revendications précédentes, **caractérisée en ce que** le coussinet de pivotement est formé de deux paliers à roulement séparés dont l'un est un roulement à aiguilles (56) et l'autre un palier lisse (58, 60) à double effet.

4. Jambe de force à ressort selon l'une quelconque des revendications précédentes, **caractérisée en ce que** la douille interne de palier (54) présente une bride radiale (54a) avec des faces d'entrée pour deux éléments à rouleaux (58, 60) aménagés dans la partie de palier (52) des deux côtés de la bride radiale (54a).

5. Jambe de force à ressort selon l'une quelconque des revendications précédentes, **caractérisée en ce que** le coussinet linéaire (64) est formé de plusieurs voies de billes réparties sur la périphérie dans la douille interne de palier (54) et dans le tube cylindrique ou dans un cylindre de guidage (62) glissé sur le tube cylindrique, entre lesquels sont agencées des séries de billes correspondantes (64c).

6. Jambe de force à ressort selon la revendication 5, **caractérisée en ce que** le cylindre de guidage (62) glissé sur le tube cylindrique (26) de l'amortisseur de chocs (16), d'une part, s'appuie via a collet annulaire (62a) qui y est formé sur le tube cylindrique (26) et, d'autre part, est relié de manière fixe au tube cylindrique (26) par roulage ou matage.

7. Jambe de force à ressort selon l'une quelconque des revendications précédentes, **caractérisée en ce que** la partie de palier (52) est reliée de manière fixe à la bielle de commande (42) via une liaison à vis centrale (50).

8. Jambe de force à ressort selon l'une quelconque des revendications précédentes, **caractérisée en ce que** le coussinet de pivotement est formé d'au moins un roulement à billes (68) axialement et radialement porteur.

9. Jambe de force à ressort selon l'une quelconque ou plusieurs des revendications précédentes, **caractérisée en ce que** le coussinet à pivotement est formé par un roulement à aiguilles (56) et des plaques de butée (70, 72) coopérant avec celui-ci entre la partie de palier (52") et la douille interne de palier (54").
